**Europäisches Patentamt**

**European Patent Office**

**Office européen des brevets**

(19)

(11) Publication number: **0 115 102**
**B1**

# EUROPEAN PATENT SPECIFICATION

(12)

(45) Date of publication of patent specification: **02.11.88**

(51) Int. Cl.⁴: **C 03 C 17/23**

(21) Application number: **83300330.4**

(22) Date of filing: **24.01.83**

(54) Method for producing a metallic oxide coating on a surface of glass substrate.

(43) Date of publication of application:
**08.08.84 Bulletin 84/32**

(45) Publication of the grant of the patent:
**02.11.88 Bulletin 88/44**

(84) Designated Contracting States:
**DE FR GB**

(56) References cited:
**EP-A-0 067 734**
**EP-B-0 006 064**

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Vong, Sandy Ting Shung**
**2808 Towner**
**Ann Arbor Michigan 48104 (US)**

(74) Representative: **Drakeford, Robert William et al**
**Ford Motor Company Limited 15/448, Research**
**& Engineering Centre Laindon**
**Basildon Essex SS15 6EE (GB)**

Courier Press, Leamington Spa, England.

# Description

This invention is directed to a method for obtaining· a preferred composition for a multi-component metallic oxide coating on a surface of a glass substrate.

It is already known to coat glass substrates by applying dry powder mixtures of organic based metallic salts to the surface of a glass ribbon either directly or in a vaporised form. For example, US—A—3081200 indicates in column 3, at line 13, that powders of organic based metallic salts can be sprayed against the surface of a heated glass substrate, but no particular data is given and the patent contains no discussion of the types of compositions generated on the surface of the glass substrate.

EP—A—0067734 discloses a procedure for testing the performances of metallic compositions as reflective coatings for glass. Five dry powder mixtures having different relative quantities of iron and chromium acetyl acetonates are sprayed on to glass substrates for varying periods of time to produce coatings of varying thicknesses. The coatings are sintered on to the substrate. The preferred composition and thickness are then selected by comparing the properties of the resulting coatings.

DE—A—2529076 teaches charging metallic salt particles prior to their application on to a glass surface. The glass is preheated to a temperature in the range from 500°C to 650°C and the organic based metallic salts are applied to the glass surface in a carrier gas, which may also be preheated. DE—A—2529077 shows a delivery system in which organic based metallic salts are used in pyrolytic glass coating techniques. However, in this case, the finer salt particles are carried to the surface of the glass, whereas the larger salt particles are held back. These larger particles are partly vaporised and then mixed with the fine salt particles being carried to the surface of the glass sheet. DE—A—2529079 teaches an apparatus in which a cyclone is used to drop large salt particles on a glass surface to be coated pyrolytically. None of these three publications discusses the chemistry of the coating developed on the glass surface being treated.

US—A—3852098 is directed to a method for increasing the rate of coating a surface of a glass substrate by using vaporised reactants. In this case, the glass substrate is coated with a metal containing coating by heating the glass and thereafter contacting the hot glass with a gaseous mixture. The gaseous mixture is from 40% to 100% saturated with the vapors of a reactive metal compound. The gaseous mixture is heated by the glass to a sufficient temperature to cause the metal compound to react, thereby depositing the coating on the glass substrate.

U.S. Patent 4,182,783 is directed to a method of vapour deposition of a coating on a glass substrate. In this method, particulate solid coating reactants are fluidised and vapourised by first establishing a fluidised bed of dispersed particulant solid coating reactants and thereafter drawing a volume of fluidised gas and suspended particulate solid coating reactants to a vapouriser. The vapouriser vapourises the dispersed particulant solid coating reactants in the reactant gas mixture. The reactant gas mixture is then directed into contact with a hot glass substrate to be coated in order to deposit a film thereon. This patent does not undertake· a discussion of the chemistry of the compositions developed on the surface of a glass substrate.

U.S. Patent 4,188,199 is directed to a process for forming a metal compound coating on a moving glass ribbon. The method comprises the steps of contacting the glass ribbon while at an elevated temperature with a fluid medium containing the reactant chemicals which undergo chemical reaction to form the metal compound on the glass ribbon. Portions of the fluid medium are discharged against the glass ribbon in stream formations which have a velocity component in the direction of movement of the glass ribbon and a velocity component which is inclined to the surface of the glass ribbon so that a selected angle is formed between the spray and the glass ribbon. This patent does not undertake any discussion of the relationship between the composition of the coating generated on the surface of the glass ribbon and the particular conditions under which that coating is applied.

U.S. Patent 4,230,271 is directed to an apparatus for evenly and uniformly depositing particulates suspended in a gas on at least one surface of a glass substrate. The device is designed to provide a uniform application of material on a substrate. Once again this patent does not undertake a discussion of the relationship between the coating composition generated on a glass substrate and the particular conditions under which the coating was applied.

EP—B—0006064 discloses that, in a method for producing a metallic oxide coating on a glass substrate by spraying a dry powder mixture onto the substrate surface, the angle between the spray and the substrate and the distance between the spraying nozzle and the substrate has an influence on the thickness of the coating.

The present invention is based upon the discovery that if a non-homogeneous, multi-component, dry powder mixture of heat-decomposable metallic salts is applied by pyrolytic techniques to the surface of a glass substrate, the composition developed on the surface of the glass depends not only upon the composition sprayed but also upon the relative disposition of the spray and the substrate. In this specification, and in the claims, "non-homogeneous mixture" means a mixture in which the individual particles of the mixture are primarily formed from only one of the components of the multi-component mixture. Such non-homogeneous mixtures may be formed by a simple dry powder mixing operation or a ball milling operation carried out for a short time period. A homogeneous mixture would be one in which the individual particles of the mixture contain all the components of the multi-component mixture. A homogeneous mixture may be formed in a spray drying operation. It is much cheaper to use a non-homogeneous mixture for spray-coating the surface of a glass ribbon. By "multi-component mixture" is meant a mixture containing two or more components.

Thus, a single non-homogeneous spray composition can and does generate a myriad different compositions on the surface of a glass substrate depending on the relative disposition of the spray and the substrate. So long as the spray conditions are held uniform, a uniform composition is developed on the surface of the glass. However, if there is a change in the spray conditions, for example the angle of the spray with respect to the glass, or the distance of the spray gun from the surface of the glass, the composition generated on the surface of the glass will change.

Accordingly, the present invention provides a method for producing a metallic oxide coating on a surface of a glass substrate which comprises spraying a multi-component non-homogeneous dry powder mixture of heat-decomposable metallic salts, in which mixture the individual particles are primarily formed from only one of the components of the mixture, on to the surface of the substrate and heating the surface of the substrate to a temperature sufficient to decompose the said metallic salts, characterised in that the composition of the dry powder mixture and the relative dispositions of the spray and the substrate are selected with reference to the results of a test procedure in which the compositions of the coatings formed on a plurality of test specimens of the glass substrate are determined and compared with a desired composition for the coating, the test specimens being prepared by using either a) different relative dispositions of the spray and the substrate and a mixture of fixed composition, or b) a variety of compositions and identical relative dispositions of the spray and the substrate.

The coating technique preferably involves spraying the dry powder mixture against the surface of the glass substrate while the surface is at a temperature in the range of from 700°F (370°C) to 1200°F (650°C).

In accordance with one embodiment of the invention, a plurality of testing samples of a non-homogeneous, dry powder mixture are formed. Each sample has a different composition of the multi-component metallic salts. Individual glass substrates are sprayed under identical conditions with the individual testing samples of the dry powder mixture, thereby to form a plurality of coated test specimens. Each coated test specimen will have on its surface a different composition of metallic oxide coating. Each of the coated test specimens is analysed to determine the chemical compositions of the coatings thereon. Thereafter, a determination is made as to which coated test specimen has a coating thereon of the preferred composition, that is, a coating of multi-component metallic oxide which exhibits the best chemical and physical durability for that multi-component system.

After the determination is made, commercial quantities of glass are sprayed under the same operation conditions used to spray the selected test specimen and using a non-homogeneous dry powder mixture having the same composition as that which produced the selected test specimen.

As an alternative embodiment of this method, a single, non-homogeneous, dry powder mixture may be prepared having a selected composition of the multi-component, metallic salts therein. This single composition is sprayed under a plurality of different conditions. Spray gun height and spray gun angle are changed while the selected composition is sprayed onto a plurality of glass substrates in order to form a plurality of coated test specimens. Each of the coated test specimens will have a different composition of metallic oxide coating thereon because the spraying condition for each coating operation was different although the sprayed composition was the same.

Once again, each of the coated test specimens is analysed to determine the chemical composition of the coating thereon and a determination is made as to which test specimen has the preferred coating composition thereon. Once this determination has been made, then commercial quantities of glass are sprayed under operating conditions which produced the preferred composition on the coated test specimen. The powder composition used for spraying is the selected composition used in spraying all of the glass substrates in order to produce the test specimens, but the spraying conditions used are those which produce the test specimen having the preferred composition coating thereon.

Two embodiments of the invention will now be described in greater detail by way of example only. The methods disclosed herein may be successfully utilised with materials yet to be developed by skilled artisans, such as new, non-homogeneous, organic based metallic salts which are heat decomposable. It is therefore contemplated that the method disclosed in this specification may also be successfully used with materials yet to be developed because the principles of operation of the method remain the same, regardless of the particular materials subjected to the method or used with the method.

Before discussing the preferred embodiment of the method of the invention, reference is made to U.S. Patent 4,217,392, which claimed a coated glass article. In that patent it was indicated that certain improved chemical and physical properties may be achieved in a multi-component metallic oxide coating on a glass substrate if the proportion of the elements making up the coating fell within a particular relationship disclosed in that patent. The spray system involved was one which generated a coating on the glass substrate coating chromium oxide, cobalt oxide and iron oxide. That particular patent dealt with the development of such a coating composition from a process in which the organic compounds of the desired metallic materials were dissolved in an organic solvent and a solution spray was applied to the glass substrate.

Using dry ingredients, as taught in this specification, there is still some preferred relationships between the three mentioned metallic oxide materials in the coating composition, but there is a slight shift in the preferred compositions when dry, non-homogeneous, powder mixture of metallic salts are used. For example, a greater amount of chromium oxide may be present in the preferred coating film, somewhere upwards of 10%. The reason for this is not fully understood.

As discussed in the mentioned patent 4,217,392 chemical and physical durabilities are measured by two separate tests. Chemical durability is measured by a first procedure in which a coated sample is subjected to a five hour hydrochloric acid vapour test. In this case, hydrochloric acid vapours surrounded the material and attempt to attack the coating on the glass. An attack of the coating changes the level of transmission of visual wavelength energy through the glass. There is a greater amount of energy transmitted as the durability of the film is attacked. The change in transmission characteristics of the coated glass to the transmission of energy therethrough is considered acceptable if it is in a range of 15% of less, any greater change of the film being considered unacceptable.

The second test is a test of physical durability. It this test the sample is initially heat tempered. Thereafter, the tempered test sample is subjected to a humidity test in which the sample is subjected to a 100% humidity at 120°F (66°C) for a period of six weeks. The high humidity can cause the coating on the surface to lossen its adherence to the surface and come free. The measurement of durability is that the surface coating stays in place for the prolonged period of time and no less than 1% of the coating is removed therefrom. If any greater amount of material is removed, the sample is rejected as failed.

First embodiment

A first embodiment of the method of the invention is carried out as follows. A preferred composition for a multi-component metallic oxide coating for a surface of a glass substrate is selected. A coating composition consisting of 9.5% chromium oxide; 18% iron oxide, with the balance cobalt oxide has excellent chemical and physical durability characteristics as it passes both the acid test and the humidity test set forth above. Therefore, in this first embodiment that composition was selected as being the preferred coating composition.

The next step is to form a plurality of test samples of a dry, non-homogeneous, powder mixture which is to be used in the pyrolytic coating technique. Each sample has a different composition of the multi-component organic based metallic salts. In accordance with this preferred teaching, four dry powder mixtures were formed. The four mixtures are as follows, each being based on the weight of a particular organic based metallic salt present. In each case the metallic salt is an acetyl acetate salt. Mixture 1: 80% cobalt, 10% iron and 10% chromium; Mixture 2: 78% cobalt, 10% iron and 12% chromium; Mixture 3: 76% cobalt, 12% iron and 12% chromium; and Mixture 4: 74% cobalt, 14% iron and 12% chromium.

Each of the mixtures 1—4 were sprayed under identical conditions against individual test specimens of a glass substrate. The test conditions were that the gun was located at an angle of 45° with respect to the surface of the test specimen and that the distance from the gun to the substrate was 9.5 inches (24.1 cm). In this manner, four different test specimens were formed and each specimen had a different coating composition of metallic oxide coating thereon.

Each of the coated test specimens was analysed to determine the chemical composition of the coating thereon. It was found that the coated test specimen coated by Mixture No. 3 had a coating composition thereon of 18% iron oxide, 9.5% chromium oxide, with the balance being cobalt oxide, the preferred composition desired. Thus, the third mixture produced the sample having the desired composition which will pass the acid test and the humidity test mentioned above.

After this determination was made, commercial quantities of glass were sprayed under the same spraying conditions used to spray the test samples, that is, the 45° angle and 9.5 inches (24.1 cm) spacing. The mixture No. 3 was used in the commercial operating process so that the resulting glass had developed thereon a coating composition of the preferred composition.

Second embodiment

In the second embodiment of the method of the invention, a single, non-homogeneous, powder composition was used for spraying four different test specimens, but different angles and distances between the test specimens to be sprayed and the spraying nozzle were used. The different conditions for the spray operation resulted in the production of different coating film compositions. In this situation, the non-homogeneous spray mixture used was that of Mixture No. 3 from the first embodiment of the method. In this second testing procedure, Test 1 was at an angle of 60° with a spacing of 13 inches (33 cm); Test 2 at an angle of 45° with 13 inches (33 cm) spacing; Test 3 at a 60° angle with a 9.5 inches (24.1 cm) distance, and Test 4 at a 45° angle with a 9.5 inches (24.1 cm) spacing. Thus, the four test specimens were generated using a single spraying composition but different spraying conditions. Example 1 produced a film composition which was characterised in that it contained 36.6% oxide, 9.6% chrome oxide, with the balance being cobalt oxide. Test No. 2 produces a film composition characterised in that it contained 30.9% iron oxide, 10.5% chrome oxide, with the balance being cobalt oxide. Test No. 3 produced a film composition characterised in that it contained 36.8% iron oxide, 10.0% chrome oxide, with the balance being cobalt oxide. Test No. 4 produced the desired preferred film composition of 18% iron oxide, 9.5% chromium, with the balance being cobalt oxide. This film composition passes the acid test and the humidity test set forth above.

Following the test procedure, commercial quantities of glass were sprayed under the conditions of Test No. 4 to produce a glass having the desired coating thereon.

## Claims

1. A method of producing a metallic oxide coating on a surface of a glass substrate which comprises spraying a multi-component non-homogeneous dry powder mixture of heat-decomposable metallic salts, in which mixture the individual particles are primarily formed from only one of the components of the mixture, on to the surface of the substrate and heating the surface of the substrate to a temperature sufficient to decompose the said metallic salts, characterised in that the composition of the dry powder mixture and the relative dispositions of the spray and the substrate are selected with reference to the results of a test procedure in which the compositions of the coatings formed on a plurality of test specimens of the glass substrate are determined and compared with a desired composition for the coating, the test specimen being prepared by using either

a) different relative dispositions of the spray and the substrate and a mixture of fixed composition, or

b) a variety of compositions and identical relative dispositions of the spray and the substrate.

2. A method according to Claim 1 wherein the test procedure comprises the steps of forming a plurality of testing samples of the non-homogeneous, dry powder mixture, each sample having a different composition of the metallic salts spraying under identical conditions individual test specimens of glass substrate with individual testing samples of the dry powder mixture, thereby to form a plurality of coated test specimens, each coated test specimen having a different composition of metallic oxide coating thereon; analysing each of the coated test specimens to determine the chemical compositions of the coatings thereon; and determining which coated test specimen has a coating thereon of the preferred composition.

3. A method according to Claim 1 wherein the test procedure comprises the steps of forming a non-homogeneous, dry powder mixture of the metallic salts; spraying individual test specimens of glass substrates with the dry powder mixture using different relative dispositions of the spray and the substrate in each test thereby to form a plurality of coated test specimens, each coated test specimen having a different composition of metallic oxide coating thereon; analysing each of the coated test specimens to determine the chemical compositions of the coatings thereon; and determining which coated test specimen has a coating thereon of the preferred composition.

4. A method according to any one of Claims 1 to 3 in which the metallic salts are acetyl acetates.

5. A method according to any one of Claims 1 to 4 in which the metallic salts are salts of cobalt, iron or chromium.

## Patentansprüche

1. Verfahren zur Herstellung einer Metalloxidbeschichtung auf einer Oberfläche eines Glassubstrates, welches umfaßt, daß man ein vielkomponentiges, nichthomogenes Trockenpulvergemisch aus Metallsalzen, die sich in der Hitze zersetzen lassen, in welcher Mischung die Einzelpartikel primär aus nur einer der Mischungskomponenten gebildet sind, auf die Substratoberfläche sprüht und diese auf eine zur Zersetzung der besagten Metallsalze ausreichende Temperatur erhitzt, dadurch gekennzeichnet, daß die Zusammensetzung des Trockenpulvergemisches und die Auswahl der relativen Sprüh- und Substratanordnungen in Bezug auf die Ergebnisse eines Testverfahrens erfolgt, in welchem die auf einer Vielzahl von Glassubstrattestmustern gebildeten Belagzusammensetzungen bestimmt und mit einer gewünschten Zusammensetzung für die Beschichtung verglichen werden, wobei die Testmuster so gefertigt werden, daß man entweder a) verschiedene relative Sprüh- und Substratanordnungen und ein Gemisch einer festen Zusammensetzung oder b) mehrere Zusammensetzungen und identische relative Sprüh- und Substratanordnungen verwendet.

2. Verfahren nach Anspruch 1, worin das Testverfahren die Schritte umfaßt, daß man mehrere Testproben des nicht-homogenen Trockenpulvergemisches fertigt, wobei jede Testprobe eine unterschiedliche Metallsalzzusammensetzung aufweist, unter identischen Bedingungen einzelne Glassubstrattestmuster mit einzelnen Testproben des Trockenpulvergemisches besprüht und damit mehrere beschichtete Testmuster bildet, wobei jedes der beschichteten Testmuster eine verschiedene Zusammensetzung der darauf befindlichen Metalloxidbeschichtung aufweist, jede der beschichteten Testmuster zur Bestimmung der chemischen Zusammensetzungen der darauf befindlichen Beschichtungen analysiert und bestimmt, welches beschichtete Testmuster eine darauf befindliche Beschichtung der bevorzugten Zusammensetzung aufweist.

3. Verfahren nach Anspruch 1, worin das Testverfahren die Schritte umfaßt, daß man ein nichthomogenes Trockenpulvergemisch der Metallsalze fertigt, unter Verwendung verschiedener relativer Sprüh- und Substratanordnungen in jedem Test einzelne Glassubstrattestmuster mit dem Trockenpulvergemisch besprüht und damit mehrere beschichtete Testmuster bildet, wobei jedes beschichtete Testmuster eine unterschiedliche Zusammensetzung der darauf befindlichen Metalloxidbeschichtung aufweist, jedes der beschichteten Testmuster zur Bestimmung der chemischen Zusammensetzungen der darauf befindlichen Beschichtungen analysiert und bestimmt, welches beschichtete Testmuster eine darauf befindliche Beschichtung der bevorzugten Zusammensetzung aufweist.

4. Verfahren nach einem der Ansprüche 1 bis 3, in welchem die Metallsalze Acetylacetate sind.

5. Verfahren nach einem der Ansprüche 1 bis 4, in welchem die Metallsalze Kobalt-, Eisen- oder Chrom-salze sind.

**Revendications**

1. Procédé de production d'un revêtement d'oxyde métallique sur la surface d'un substrat de verre qui comprend la pulvérisation d'un mélange en poudre sèche non-homogène à constituants multiples de sels métalliques décomposables par la chaleur, mélange dans lequel les particules individuelles sont principalement formées d'un seul des constituants du mélange, sur la surface du substrat, et le chauffage de la surface du substrat à une température suffisante pour décomposer ces sels métalliques, caractérisé en ce que la composition du mélange en poudre sèche et les dispositions relatives de la pulvérisation et du substrat sont choisies en se référant aux résultats d'un mode opératoire d'essai dans lequel les compositions des revêtements formés sur plusieurs échantillons d'essai du substrat de verre sont déterminées et comparées avec la composition désirée pour le revêtement, les échantillons d'essai étant préparés en utilisant soit

a) des dispositions relatives différentes de la pulvérisation et du substrat et un mélange de composition fixe, soit

b) des compositions différentes et des dispositions relatives identiques de la pulvérisation et du substrat.

2. Procédé suivant la revendication 1, dans lequel le mode opératoire d'essai comprend des stades de formation de plusieurs échantillons d'essai des mélanges pulvérulents non homogènes, chaque échantillon ayant une composition en poudre sèche différente des sels métalliques; de pulvérisation dans des conditions identiques d'échantillons d'essai individuels de substrat de verre avec des échantillons d'essai individuels du mélange pulvérulent sec, pour former ainsi plusieurs échantillons d'essai revêtus, chaque échantillon d'essai revêtu ayant une composition différente du revêtement d'oxyde métallique qu'il porte; d'analyse de chacun des échantillons d'essai revêtus pour déterminer les compositions chimiques des revêtements appliqués; et de détermination de l'échantillon d'essai revêtu qui porte le revêtement ayant la composition préférée.

3. Procédé suivant la revendication 1, dans lequel le mode opératoire d'essai comprend les stades de formation d'un mélange non homogène en poudre sèche, des sels métalliques, de pulvérisation des échantillons d'essai individuels sur des substrats de verre avec le mélange en poudre sèche en utilisant des dispositions relatives différentes de la pulvérisation et du substrat dans chaque essai, formant ainsi plusieurs échantillons d'essai revêtus, chaque échantillon d'essai revêtu portant une composition de revêtement d'oxyde métallique différente; d'analyse de chacun des revêtements d'essai revêtus pour déterminer les compositions chimiques des revêtement présents sur ceux-ci; et de détermination de l'échantillon d'essai revêtu portant le revêtement ayant la composition préférée.

4. Procédé suivant l'une quelconque des revendications 1 à 3, dans lequel les sels métalliques sont des acétylacétates.

5. Procédé suivant l'une quelconque des revendications 1 à 4, dans lequel les sels métalliques sont des sels de cobalt, de fer ou de chrome.